(19) Europäisches Patentamt
European Patent Office
Office européen des brevets

(11) Publication number: **0 006 337**
**A1**

## (12) EUROPEAN PATENT APPLICATION

(21) Application number: 79301101.6

(22) Date of filing: 11.06.79

(51) Int. Cl.³: **C 01 B 7/19**

(30) Priority: 09.06.78 US 914130

(43) Date of publication of application: 09.01.80
Bulletin 80/1

(84) Designated Contracting States: BE FR GB NL

(71) Applicant: OCCIDENTAL CHEMICAL COMPANY,
10889 Wilshire Boulevard, Los Angeles,
California 90024 (US)

(72) Inventor: Hirko, Ronald J., Route 10 Box 147 D, Lake City, Florida 32055 (US)
Inventor: Mills, Harold E., Route 9 Box 436, Lake City, Florida 32055 (US)

(74) Representative: Howden, Christopher Andrew,
Forrester & Boehmert Widenmayerstrasse 5/IV,
D-8000 München 22 (DE)

### (54) Recovery of hydrogen fluoride from metallic fluoride salts.

(57) Anhydrous hydrogen fluoride of high purity is recovered from metallic fluoride salts containing phosphate values by digesting the metallic salts in an aqueous solution in a humid atmosphere at a sufficiently high temperature to release a gas containing hydrogen fluoride and a negligible amount of $P_2O_5$. The released gas is rectified in a rectification operation which includes a rectification zone (34) in which the rectification occurs in the presence of sulphuric acid.

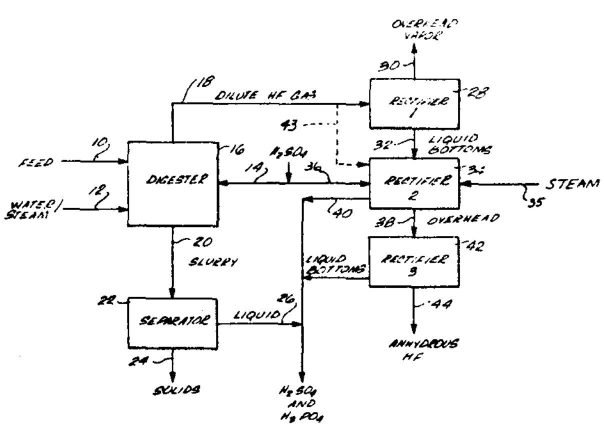


EP 0 006 337 A1

"Recovery of Hydrogen Fluoride from Metallic Fluoride Salts"

THIS INVENTION relates to the recovery of hydrogen fluoride from metallic fluoride salts which contain substantial amounts of phosphate values, for example from waste products resulting from the production of phosphoric acid by the wet process.

The production of phosphoric acid by the wet process results in the production of waste waters, known as "pond waters", that contain, inter alia, fluoride, metallic and phosphate values, and material precipitated from such waters can contain substantial amounts of metallic fluoride salts contaminated with phosphate values. For example, sediment obtained from the floor in gypsum cooling ponds can contain up to 25% fluoride. Similarly, fluoride-containing solids can be precipitated from gypsum cooling pond water, or waste water, by controlling neutralization with limestone and/or lime. These precipitates are contaminated with phosphate and metallic materials.

Conventionally metallic fluoride solids are purified by being reacted with concentrated sulphuric acid in a low humidity atmosphere to release volatile fluoride values. However, such reaction also causes the liberation of volatile fluorophosphates, and the evolved fluorophosphates rapidly hydrolyze to yield compounds such as $HPO_2F_2$ and $H_2PO_3F$, which ultimately reduce to HF and $H_3PO_4$. The resulting hydrogen fluoride is thus contaminated with phosphate values and is unsatisfactory for commercial use as anhydrous hydrogen fluoride for which a HF to $P_2O_5$ ratio of at least 10,000:1 is required.

It is therefore an object of this invention to provide methods for recovering hydrogen fluoride substantially free of

phosphate values from metallic fluoride salts, for example solids precipitated from cooling pond waters and fluoride-containing sludges resulting from phosphate production operations.

Accordingly, one aspect of the present invention provides a method for recovering hydrogen fluoride from metallic fluoride salts comprising metallic cations reactive with sulphuric acid, which method comprises introducing to a digestion zone such metallic fluoride salts, water and/or steam, and sulphuric acid and maintaining the digestion zone at an appropriately elevated temperature for reaction therein to produce a gas comprising hydrogen fluoride and phosphate values, and a slurry comprising a liquid component including introduced sulphuric acid, introduced water and phosphoric acid, and a residual solids component resulting from reaction of the metallic fluoride salts with the sulphuric acid, the concentration of water and sulphuric acid in the digestion zone being such that the resulting gas has a weight ratio of hydrogen fluoride to $P_2O_5$ of at least about 100:1; and withdrawing the resulting gas from the digestion zone.

The desired results are conveniently obtained by introducing water and sulphuric acid to the digestion zone in such amounts that Ci is in the range about 20 to about 70, R is in the range about 1 to 15, and Cf is in the range about 25 to 90, where:

Ci = amount of sulphuric acid and phosphoric acid theoretically present in the digestion zone after introduction of the sulphuric acid and water and/or steam to the digestion zone assuming no fluoride values are volatilized, in excess of the amount of sulphuric acid required for reaction with reactive metal cations in the digestion zone, Ci being expressed in units of percent by weight in the liquid phase;

R = Ci/HFi, where HFi is the theoretical concentration of hydrogen fluoride in the liquid in the digestion zone after introduction of the sulphuric acid and water to the

digestion zone, assuming no fluoride values are volatilized, in units of percent by weight in the liquid in the digestion zone; and

Cf = actual concentration of the sulphuric acid and phosphoric acid in the liquid component in units of percent by weight in the liquid component.

By operating the digestion zone at these values for R, Ci and Cf, the gas withdrawn from the digestion zone has a weight ratio of hydrogen fluoride to $P_2O_5$ of at least 100:1.

Hence, in a further aspect of this invention there is provided a method for recovering hydrogen fluoride substantially free of phosphate values from metallic fluoride salts comprising metallic cations reactive with sulphuric acid, which method comprises introducing to a digestion zone such metallic fluoride salts, water and/or steam, and sulphuric acid and maintaining the digestion zone at an appropriately elevated temperature to produce a gas comprising hydrogen fluoride and phosphate values from the metallic fluoride salts, and a slurry comprising a liquid component including introduced water, introduced sulphuric acid and phosphoric acid, and a residual solids component resulting from reaction of the metallic fluoride salts with the sulphuric acid, the water and sulphuric acid being introduced to the digestion zone in such amounts that Ci is in the range about 20 to about 70, R is in the range about 1 to about 15, and Cf is in the range about 25 to about 90, where:

Ci = amount of sulphuric acid and phosphoric acid theoretically present in the digestion zone after introduction of the sulphuric acid and water and/or steam to the digestion zone, assuming no fluoride values are volatilized, in excess of the amount of sulphuric acid required for reaction with the reactive metallic cations in the digestion zone, Ci being expressed in units of percent by weight in the liquid phase;

R = Ci/HFi, where HFi is the theoretical concentration

of hydrogen fluoride in the liquid in the digestion zone after introduction of the sulphuric acid and water and/or steam to the digestion zone, assuming no fluoride values are volatilized, in units of percent by weight in the liquid in the digestion zone; and

Cf = actual concentration of sulphuric acid and phosphoric acid in the liquid component in units of percent by weight in the liquid component;

and

withdrawing the resulting gas from the digestion zone.

Preferably the concentrations of water and sulphuric acid in the digestion zone are maintained such that at least 60% of the fluorine in the metallic fluoride salts introduced to the digestion zone are in the released gas withdrawn from the digestion zone, the released gas comprises at least 10% by weight of hydrogen fluoride, and the slurry withdrawn from the digestion zone has a solids content sufficiently low that it is pumpable.

As mentioned above, the metallic fluoride salts introduced to the digestion zone 16 comprise metallic cations reactive with sulphuric acid, such as $Ca^{++}$, $Al^{+++}$, $Fe^{+++}$, $Mg^{++}$, and the like.

Further, the metallic fluoride salts preferably contain at least about 7% by weight on a dry basis fluorine because processing of salts containing less than about this amount of fluorine can be uneconomical in some circumstances.

In addition, the metallic fluoride salts desirably contain not more than about 25% by weight phosphate values because it is otherwise very difficult to effect an efficient separation of HF from the phosphate values. A convenient lower limit of the amount of phosphate values in the salts for economic processing is about 4% by weight on a dry basis.

It should be realised that the phosphate values present in the metallic fluoride salts usually are not actually present as "$P_2O_5$", but typically are present as

$PO_4^{---}$ and complexed with fluorine as fluorophosphates. However, standard tests used for analysis of phosphate values yield results in terms of $P_2O_5$ content. Accordingly, for convenience, the expressions "$P_2O_5$", "$P_2O_5$ values" and the like are used herein to indicate phosphate values regardless of the form in which such values are present. Likewise, analysis for calcium, aluminum, iron, magnesium, silicon, sodium, manganese, and sulphur yields results in terms of CaO, $Al_2O_3$, $Fe_2O_3$, MgO, $SiO_2$, $Na_2O$, MnO, and $SO_4$, respectively, and similar references should be construed accordingly.

Because water is also introduced to the digestion zone, the metallic fluoride salts can be introduced to the digestion zone in either wet or dry condition. Accordingly, there is no need to dry the salts prior to introduction, with possible cost savings, and salts are typically introduced to the digestion zone wet, possibly even in the form of concentrated slurry. This is an advantage over prior art processes for producing hydrogen fluoride from metallic fluoride salts where it is necessary that the feed be substantially dry because digestion is conducted in a low humidity atmosphere.

The metallic fluoride salts introduced to the digestion zone may conveniently be solid waste obtained from cooling pond waters and/or fluoride-containing sludges resulting from phosphate production operations.

One convenient method for recovering metallic fluoride salts from phosphate operation waste water is disclosed in U.K. Patent Specification No. 1,505,146 and involves, in a first stage, agitating such waste water with an amount of calcium carbonate to provide between 0.3 and 0.8 equivalents of calcium per equivalent of fluorine values in the water; thereafter, in a second stage, agitating the calcium carbonate-treated waste water with additional calcium carbonate in an amount to form calcium fluoride solids, and such that the total calcium carbonate addition in the two stages provides not less than 0.8 equivalents

of calcium per equivalent of fluorine values in the waste water; and separating the solids from the aqueous phase following said second stage.

U.S. Patent Application Serial No. 863,085 discloses a preferred method for effecting such recovery that is a modification of the above method and in which at least some of the calcium carbonate specified for agitation with the water in at least one of said first and second stages of the above method is substituted by calcium oxide.

The sulphuric acid and water may be added to the digestion zone separately or together in the form of an aqueous solution of sulphuric acid. Further, steam can be added to the digestion zone in place of all or part of the water, such steam providing at least part of the energy required for vaporization of water and hydrogen fluoride in the digester. Additional energy is provided by the exothermic reactions occurring in the digestion zone. In addition to or instead of steam, other heating means can be used; for example, a portion of the liquid in the digestion zone may be circulated through a heat exchanger, or the digestion zone may be provided with steam jacketing or external electric heating elements. In this way, the digestion zone is maintained at an elevated temperature at or near the boiling of the liquid in the digestion zone.

In the digestion zone, the sulphuric acid reacts with the metallic fluoride salts to yield hydrofluoric acid and the corresponding metal sulphate. For example, in the case of metallic fluoride salts containing calcium fluoride, the following reaction occurs:

$$CaF_2 + H_2SO_4 \xrightarrow{H_2O} CaSO_4 \downarrow + 2\ HF \uparrow . \qquad (1)$$

In addition, phosphoric acid is generated in the digester by the action of sulphuric acid on metallic phosphate salts which are present in the digester.

By appropriate selection and regulation of the amount of sulphuric acid and water introduced to the digestion zone, the resulting gas withdrawn from the digestion zone can be maintained substantially free of $P_2O_5$, i.e., the fluorine to $P_2O_5$ mass ratio can be maintained greater than about 100:1.

Conditions are preferably such that the F to $P_2O_5$ mass ratio in the gas is maintained greater than 1000:1.

This is thus unlike prior art methods in which metallic fluoride salts containing phosphate values are digested in a low humidity atmosphere, resulting in the liberation of substantial quantities of fluorophosphates.

In order to have an economically viable process, the yield obtained in the digestion zone, the solids content of the resulting slurry and the concentration of hydrogen fluoride in the resulting gas require careful control. Table I below shows broad preferred and most preferred ranges for process variables and parameters of the digestion zone.

In this Table, R, Ci and Cf have the meanings given above and

US = solids content of the slurry, % by weight;

Y = the percent by weight of the fluorine in the metallic fluoride salts introduced to the digestion zone that is present in the resulting gas withdrawn from the digestion zone, i.e. yield of HF; and

$HF_v$= concentration of HF in the resulting gas withdrawn from the digestion zone in % by weight.

As shown in Table I, the percent by weight of the fluorine in the metallic fluoride salts introduced to the digestion zone which are recovered in the distillate withdrawn from the digestion zone, Y, is preferably at least 60%, and more preferably at least 80%.

Further, it is preferred that the solids content of the slurry produced in the digestion zone US, be sufficiently low that the slurry, which is thixotropic, be pumpable by conventional pumping equipment. Thus, US is preferably less than about 50, and more preferably less than about 45 for ease in pumping.

A high concentration of hydrogen fluoride in the distillate, $HF_v$, is desired, because less energy is required to rectify the distillate to produce anhydrous hydrogen fluoride by vaporization of the water in the distillate. Therefore, it is preferred that this concentration be greater than about 10% by weight, and more

TABLE 1

RANGES FOR PROCESS VARIABLES AND PARAMETERS

| VARIABLE/ PARAMETER | UNITS | BROAD PREFERRED RANGE | MOST PREFERRED RANGE |
|---|---|---|---|
| $HF:P_2O_5$ | - | $\geq 100:1$ | $\geq 1000:1$ |
| US | % by weight | Pumpable slurry ($\leq 50$) | $< 45$ |
| Y | % by weight | $\geq 60$ | $> 80$ |
| $HF_v$ | % by weight | $\geq 10$ | $> 20$ |
| R | - | 1-15 | 6-10 |
| Ci | % by weight | 20-70 | 40-55 |
| Cf | % by weight | 25-90 | 75-85 |

preferably be greater than about 20% by weight, e.g. 20% to 30%.

A mathematical model has been developed to relate the amount of water and sulphuric acid introduced to the digestion zone to US, Y, and $HF_v$. This model was developed using equilibrium data regarding the system $HF-H_2SO_4-H_2O$ presented in the report <u>Sulfuric Acid Extractive Distillation Process for the Recovery of Anhydrous Hydrofluoric Acid from By-Product Aqueous Hydrofluoric Acid</u>, R. W. LeGassie and J. P. Termini, NYO-204A, 1954. Using this equilibrium data and a mass balance around the digestion zone, assuming equilibrium is achieved in the digestion zone, the mathematical model was developed.

According to this model, the quantity of water and sulphuric acid introduced to the digestion zone are so selected that the following equations are substantially satisfied:

$$HF_v = \frac{KCi}{((K-1)J+1)R} \geq 10\% \qquad (2)$$

$$Y = \frac{100JK}{(K-1)J+1} \geq 60\% \qquad (3)$$

and

$$US = \frac{1}{\frac{RW}{Cf} + \frac{1}{100}} \leq 50\% \qquad (4)$$

where

$$J = 1 - \frac{Ci}{Cf}; \qquad (5)$$

$$K = 0.095565e^{(0.075435Cf)};$$

W = with respect to the metallic fluoride salts introduced to the digestion zone, the mass ratio of fluorine represented as HF to calcium oxide represented as $CaSO_4$;

and the remaining terms have the meanings given above.

As demonstrated by examples presented herein, this model has been experimentally verified.

Hence in a further aspect the present invention provides a method for recovering hydrogen fluoride substantially free of phosphate values from metallic fluoride salts comprising metallic cations reactive with sulphuric acid, which method comprises introducing to a digestion zone such metallic fluoride salts, water and/or steam, and sulphuric acid and maintaining the digestion zone at an appropriately elevated temperature to produce a gas comprising hydrogen fluoride and phosphate values from the metallic fluoride salts and a slurry comprising a liquid component including introduced water, introduced sulphuric acid and phosphoric acid, and a residual solids component resulting from the reaction of metallic fluoride salts with sulphuric acid; and withdrawing the resulting gas from the digestion zone, the quantity of water and sulphuric acid introduced to the digestion zone being so selected that the following equations are substantially satisfied:

$$HF_v = \frac{KCi}{((K-1)J+1)R} \quad \geqslant 10\%$$

$$Y = \frac{100JK}{(K-1)J+1} \quad \geqslant 60\%$$

and $$US = \frac{1}{\frac{RW}{CF} + \frac{1}{100}} \quad \leqslant 50\%$$

where:

$$J = 1 - \frac{Ci}{Cf} \quad ;$$

$HF_v$ = concentration of HF in the resulting gas withdrawn from the digestion zone in % by weight;

Y = the percent by weight of the fluorine in the metallic fluoride salts introduced to the digestion zone that is present in the resulting gas withdrawn from the digestion zone;

US = solids contents of the slurry, % by weight;

K = $0.095565e^{(0.075435Cf)}$;

W = with respect to the metallic fluoride salts introduced to the digestion zone, the mass ratio of fluorine represented as HF to calcium oxide represented as $CaSO_4$;

Ci = amount of sulphuric acid and phosphoric acid theoretically present in the digestion zone after introduction of the sulphuric acid and water and/or steam to the digestion zone, assuming no fluoride values are volatilized, in excess of the amount of sulphuric acid required for reaction with the reactive metallic cations in the digestion zone, where Ci is in units of percent by weight in the liquid phase;

R = Ci/HFi, where HFi is the theoretical concentration of hydrogen fluoride in the liquid in the digestion zone after introduction of the sulphuric acid and water and/or steam to the digestion zone, assuming no fluoride values are volatilized, in units of percent by weight in the liquid in the digestion zone; and

Cf = actual concentration of sulphuric acid and phosphoric acid in the liquid component in units of percent by weight in the liquid component.

To achieve the preferred values for $HF_v$, Y, and US, as discussed above, it is necessary that R be between about 1 and 15, Ci be between about 20 and about 70, and Cf be between about 25 to about 90. To achieve the most preferred values for US, Y and $HF_v$, it is necessary that R be from about 6 to about 10, Ci be from about 40 to about 55, and Cf be from about 75 to about 85. This is summarized in Table I.

The relationship between these various process variables and parameters will be discussed further below.

The present invention is also concerned with a method for increasing the hydrogen fluoride to $P_2O_5$ weight ratio in a feed mixture, for example in the gas withdrawn from the digestion zone, by treatment involving at least one rectification step. Hence, in another aspect the invention provides a method for producing substantially anhydrous hydrogen fluoride having a hydrogen fluoride to $P_2O_5$ weight ratio greater than about 10,000 from a feed mixture comprising $P_2O_5$ and from about 20 to about 35% by weight hydrogen fluoride, the weight ratio of hydrogen fluoride to $P_2O_5$ in the feed mixture being in the range about 100:1 to 10,000:1, the remainder of the feed mixture being constituted substantially entirely by water, which method comprises introducing such a feed mixture to a rectification zone for rectification of the feed mixture therein to produce a vapour stream enriched with hydrogen fluoride; introducing sufficient sulphuric acid to the rectification zone such that the resulting vapour stream comprises at least 80% by weight HF and has a hydrogen fluoride to $P_2O_5$ weight ratio of at least 10,000:1; and withdrawing the resulting vapour stream enriched with hydrogen fluoride from the rectification zone.

If appropriate, the feed mixture may comprise a substantially azeotropic mixture of water and hydrogen fluoride prepared by rectifying a feed mixture comprising $P_2O_5$ and from about 10% to 35% by weight hydrogen fluoride in an initial rectification zone. In this case, a feed mixture, e.g. gas withdrawn from the digestion zone, is subjected to two sequential rectification steps to increase the hydrogen fluoride content.

Further features and advantages of the present invention will become more apparent upon consideration of the following description with reference to the accompanying drawings in which:

FIGURE 1 is a flow sheet showing schematically the steps of one preferred method of this invention;

FIGURE 2 is a graph illustrating the predicted

relationship between process parameters and process variables in a digestion zone operated in accordance with the method of the present invention;

FIGURE 3 is a graph illustrating the relationship between the hydrogen fluoride to $P_2O_5$ weight ratio and percent hydrogen fluoride in the gas withdrawn from a digestion zone operated in accordance with the method of this invention; and

FIGURE 4 illustrates schematically test apparatus used to demonstrate this invention.

Referring to the drawings, in the process illustrated in Figure 1, metallic fluoride salts, water and/or steam, and sulphuric acid are introduced to a digestion zone in the form of a digester 16 via lines 10, 12 and 14, respectively. The sulphuric acid and the metallic fluoride salts react to produce a gas containing hydrogen fluoride at a dilute concentration and $P_2O_5$ values and to produce a slurry consisting of a liquid component which includes introduced water introduced sulphuric acid, phosphoric acid and some hydrofluoric acid, and a residual solids component comprising non-reactive components of the metallic fluoride salts and metallic sulphate salts such as calcium sulphate and magnesium sulphate, the solids component of the slurry typically being predominantly calcium sulphate.

The contents of the digester 16 are preferably maintained under agitation to ensure that the reaction mass in the digester achieves equilibrium conditions.

The digestion can be operated under either batch conditions or continuously.

The digestion is conveniently conducted at an absolute pressure ranging from about 90 mm Hg ($11 \times 10^3$ $N/m^2$) to atmospheric ($1 \times 10^5$ $N/m^2$) so that Cf can be maintained from about 25 to about 90. It has been found that reducing the pressure in the digester 16 below atmospheric does not appear to affect either the yield from the process or the distillate composition. However, digester

operation under vacuum decreases the operational temperature required, without affecting the equilibrium properties of the system.

The resulting slurry is withdrawn from the digester 16 and passed via line 20 to a separator 22 to separate the solid component from the liquid component. The separator 22 may be, for example, any suitable conventional separator, such as a drum filter, settling basin or the like. The separated solids and liquid components are withdrawn separately from the separator 22 via respective lines 24 and 26.

The gas produced in the digester 16 comprises phosphate values, hydrogen fluoride, typically present in amounts ranging from about 10% to about 35% by volume hydrogen fluoride, with the remainder being composed substantially entirely of water. The hydrogen fluoride to phosphate mass ratio is greater than about 100:1 and is preferably greater than 1000:1.

The gas is withdrawn from digester 16 in line 18 and is subjected to rectification treatment to produce anhydrous hydrogen fluoride having a hydrogen fluoride to phosphate weight ratio of greater than 10,000:1. In the illustrated embodiment, this is effected by introducing the hydrogen fluoride-containing distillate to a first rectifier 28, in which the distillate is concentrated to about 35 to about 39% by weight hydrogen fluoride at an absolute pressure in the range 90 mm Hg ($11 \times 10^3$ N/m$^2$) to atmospheric ($1 \times 10^5$ N/m$^2$). Such treatment results in the production of a vapour comprising mainly water and also containing carbon dioxide, such vapour being removed in line 30. The treatment also results in the production of a liquid that comprises a substantially azeotropic mixture of water and hydrogen fluoride containing phosphate values.

The azeotropic mixture is removed from rectifier 28 and passed via line 32 to a second rectifier 34 for further rectification treatment. Sulphuric acid is introduced to the second rectifier in such quantities that a gas having

a hydrogen fluoride concentration of at least 80% by volume, and that is preferably substantially anhydrous, is produced. This can be effected by introducing to the second rectifier sufficient sulphuric acid to yield a solution comprising from about 40 to about 90% by weight sulphuric acid on a hydrogen fluoride-free basis.

It has been found that introduction of steam to the second rectifier enhances the hydrogen fluoride yield. Accordingly, steam is preferably introduced to the second rectifier 34 via line 35.

The resulting liquid bottoms in the second rectifier 34 contain sulphuric acid, phosphoric acid, and water and are removed from the rectifier 34 in line 40. The bottoms in line 40 are conveniently combined with the liquid stream 26 from the separator 22 and passed to disposal.

The gas produced in the second rectifier generally has a hydrogen fluoride to $P_2O_5$ weight ratio of greater than 10,000:1. The gas is removed in line 35 and, if it is necessary or desirable to remove additional water from the gas, it can be passed to a third rectification zone 42 for further treatment to produce substantially anhydrous hydrogen fluoride.

If the hydrogen fluoride content of the dilute fluoride-containing gas in line 18 from the digester 16 is sufficiently high, i.e., generally greater than about 20% by weight, then the first rectifier 28 can be bypassed and the gas introduced directly to the second rectifier via line 43 shown dashed in Figure 1.

Figure 2 is a graph illustrating the predicted effect of changes in R and Ci on US, $HF_v$, and Y, assuming Cf = 85. Analysis of equations 2 to 4, and Figure 2, as well as experimental data, has led to an understanding of the relationship between the process variables R, Ci and Cf and the process parameters US, Y, $HF_v$, and the ratio of hydrogen fluoride to $P_2O_5$ in the gas produced in the digestion zone. These relationships are summarized in Table II.

TABLE II

EFFECT OF PROCESS VARIABLES ON PROCESS PARAMETERS

| | CHANGE IN VARIABLE | CHANGE IN PARAMETER | | | |
|---|---|---|---|---|---|
| | | US | Y | $HF_v$ | $HF/P_2O_5$ |
| R | UP | DOWN | NC | DOWN | UP |
| | DOWN | UP | NC | UP | DOWN |
| Ci | UP | NC | DOWN | UP | DOWN |
| | DOWN | NC | UP | DOWN | UP |
| Cf | UP | UP | UP (small effect) | UP | UP |
| | DOWN | DOWN | DOWN (small effect) | DOWN | DOWN |

NC = Substantially No Change

In Table II it is assumed that only one of the three process variables is being changed while the other two are maintained constant, although in practice this is very difficult to achieve because each variable depends on the amount of sulphuric acid and water added to the digestion zone.

As shown in Table II, a change in each of the process variables has both a beneficial and an adverse effect on the process parameters. For example, increasing R decreases US and increases the HF to $P_2O_5$ ratio, both of which are beneficial results, but has the adverse effect of decreasing $HF_v$. Likewise, decreasing Ci has the beneficial effects of increasing Y and the HF to $P_2O_5$ ratio, but has the adverse effect of decreasing $HF_v$. Therefore, in order to maintain US, Y, $HF_v$, and the hydrogen fluoride to phosphate ratios in the preferred ranges, it is necessary to maintain R, Ci and Cf in the ranges presented in Table I.

The ratio of HF to $P_2O_5$ in the gas produced in the digestion zone appears to depend on the concentration of HF in the gaseous distillate. Figure 3 presents the experimentally determined correlation between HF and $P_2O_5$ in the digester distillate. As shown in Figure 3, the HF to $P_2O_5$ ratio in the distillate increases as the hydrogen fluoride content of the distillate decreases. It is hypothesized that this correlation indicates that the distillate phosphate content is at least partly a result of entrainment. A typical distillate represents about a 3,000 fold refinement in the HF to $P_2O_5$ ratio present in the digestion zone.

It should be noted that all concentrations and ratios presented herein are percentages by weight, unless indicated otherwise.

The invention is further illustrated in the following examples:

Examples 1-23

Metallic fluoride salts were precipitated from cooling phosphoric acid plant pond waters in accordance with the

method described in the above U.S. Patent Application Serial No. 863,085, as discussed above. Column A of Table III below presents the analysis of the precipitate used for Examples 1 to 13, and Column B of that Table presents the analysis of the precipitate used For Examples 14 to 23.

TABLE III

FEED ANALYSIS, % BY WEIGHT

TABLE 3

| Component | A | B |
|---|---|---|
| F | 24.54 | 23.25 |
| $P_2O_5$ | 14.16 | 13.99 |
| $CO_2$ | 3.84 | 3.78 |
| CaO | 54.01 | 53.07 |
| $Al_2O_3$ | 2.03 | 1.98 |
| $Fe_2O_3$ | 1.01 | 0.97 |
| MgO | 0.58 | 0.55 |
| $SiO_2$ | 2.59 | 2.35 |
| $Na_2O$ | 0.44 | 0.98 |
| MnO | 0.04 | - |
| $SO_4$ | 2.66 | 2.74 |

Tests were conducted in a batch digestion system comprising a 500 ml Teflon (Registered Trade Mark) boiling flask connected via Teflon tubing to an ice water condenser. Monel having an inner portion composed of monel tubing. For experiments conducted at reduced pressure, the system was modified to include a series of traps in order to avoid damage to the vacuum pump used. The desired vacuum was maintained by an air bleed and was monitored in a distillate receiver flask. The digester temperature was observed using an iron-constantan thermocouple inserted in a closed-end monel tube. Agitation of the reactor contents was effected with a magnetic stirrer and a Teflon

clad stir bar.

A batch digestion test was initiated by charging the Teflon flask with a weighed portion of the dry feed material followed by the desired amount of water. This mixture was agitated for about thirty minutes to ensure complete wetting of the solid. The desired amount of standardized sulphuric acid, containing approximately 96% $H_2SO_4$, was added to the digester from a Teflon separatory funnel attached directly to the system to eliminate fluoride vapour losses. Upon mixing, the temperature normally increased from room temperature to about 120 to 130°C. Heat was applied to the Teflon flask via a variable heating jacket. In the case of reduced pressure operation, the digester was air cooled to about 70°C after which the vacuum and heat were applied. The heating rate was carefully controlled to eliminate digester priming by the liberated $CO_2$.

The termination of the digestion period was estimated from a predetermined temperature-liquid composition curve. After appropriate cooling period the mass of the digester contents was determined, and the contents of the digester were vacuum filtered. The sulphuric acid filtrate was recovered for analysis. The resulting filter cake was washed repeatedly with water until a clear filtrate was obtained. The cake was subsequently oven dried at 105°C overnight and weighed.

The fluoride contents of the feed solids, distillate, and bottoms residue (liquid and solids separately) were analyzed with a fluoride electrode using as a buffer medium TISAB, which is available from Orion Research Incorporated of Cambridge, Massachusetts. The solids were initially fused with potasium carbonate followed by dissolution in water. The liquid samples were water diluted. One part of diluted sample (1 to 100 ppm F) was combined with nine parts TISAB prior to fluoride electrode analysis.

The experimental fluoride yield was determined from the quantity of fluoride not evolved from the digester.

This was determined from the masses and fluoride contents of the liquid and solid residue phases. The liquid mass was determined from the total residual mass less that of the washed and dried solids. Based on the initial system mass (less the volatile $CO_2$), the final mass and the respective fluoride contents, the quantity of the distillate and fluoride content of the distillate were calculated. The yield calculated in this manner agreed well with the yield based on the actual distillate collected. However, because it was difficult to avoid losses of distillate by hold-up and/or evaporation, the difference method was regarded as superior.

The heteropoly blue method of Boltz and Mellon (Boltz, D.F. and Mellon, M.G., Anal. Chem., 19,873 (1947), modified by use of boric acid to complex fluoride, was used for the determination of silica and phosphate in the aqueous hydrofluoric acid distillate.

In Table IV are tabulated the experimental results obtained from these batch laboratory tests. Results from experiments not tabulated were rejected from consideration for a variety of reasons; for example, inefficient agitation, system priming or boil-over, and too high solids content in underflow.

Columns 2 to 6 contain the primary variables which influenced the distillate composition. Yield and underflow solids content are shown in columns 11 to 16, respectively. The analyses of the residue components are indicated by columns 7 to 10, while the ratios of $HF/P_2O_5$ and $HF/SiO_2$ in the distillate are tabulated in columns 17 and 18, respectively.

Ci and R were calculated in accordance with the definition presented above. Exemplary of such calculation are the calculations conducted for Example 10.

$$Ci = \frac{\text{Amount of sulphuric acid + phosphoric acid available in grams}}{\text{liquid phase in grams}}$$

$$= \frac{\text{sulphuric acid added + phosphoric acid from salts - sulphuric acid for reaction with Ca}}{\text{feed solids + water added + sulphuric acid added - calcium sulphate percipitated - } CO_2 \text{ evolved}}$$

$$= \frac{0.968 \times 228.6 + 14.66 - 70.86}{75 + 149.7 + 228.6 - 98.34 - 2.88} = \frac{165.08}{351.98}$$

$$= 46.90\%$$

This calculation does not consider the amount of $H_2SO_4$ which reacts with reactive metal cations in the feed material other than calcium and does not consider the sulphuric acid contributed by the $SO_4$ in the feed material. These amounts are negligible.

$$R = \frac{Ci}{HFi} = \frac{46.90\%}{\frac{9.38 \times 100}{351.98}} = 8.5$$

Using the primary variables R, Ci, and Cf and Equations 2 to 5, predicted values for the distillate composition, yield, and underflow solids content were computed. The predicted distillate composition appears to be generally biased high, except in Example 23 where the experimental value is low. The agreement, however, does indicate that the distillate composition can be predicted with some certainty for a variety of conditions.

Closely tied with the distillate composition is the overhead yield of hydrogen fluoride. The deviation between the predicted and experimental yields are somewhat random and exhibit no certain bias. Apart from a few instances, the deviations are less than two percentage points. The predicted percentage of solids in the underflow is biased high by a few points. This indicates that slightly less solids are formed than are predicted from the feed material calcium content.

The model from which Equations 2 to 5 originated assumes a total dissolution of the fluoride contained in feed material. Analysis of the dry, washed calcium sulphate residue showed HF contents ranging from 0.5 to 2.0% HF (column 7). This is not surprising, for the feed material normally contains significant quantities of aluminum, iron, magnesium, etc., all of which form insoluble fluoride species. The undissolved fluoride is likely due to acid-insoluble aluminum and iron fluorides. This lack of fluoride dissolution is nearly compensated by the lower than expected fluoride concentration remaining in the underflow liquid phase. Columns 8 and 9 show the predicted and observed concentrations. In every case the experimental HF content of the liquid is several times less than that predicted. This is probably due to small errors associated with the adaption of the LeGassie and Termini data to the present system. The distillate composition is more susceptible to the undissolved fluoride since it is based strictly on the solubilized fluoride.

The effects of reduced pressure on the digester operation are illustrated by Examples 14 to 17 and 20 to 23. A decrease in operational temperature appears to be the only significant difference. There is no evidence suggesting an increase or decrease in either distillate composition or yield. More important, however, is the fact that digester operation under vacuum decreased the operational temperature by 50 to 90$^{\circ}$C without affecting the equilibrium properties of the system.

At atmospheric pressure, the observed final temperature in the batch tests corresponded very closely (within a few degrees) with the standard boiling point of a sulphuric acid solution of composition Cf. This was not the case for the reduced pressure tests where the observed temperature was generally lower than that predicted for an analogous sulphuric acid solution at the same pressure.

Special runs (not shown) were conducted to obtain

temperature-time and temperature-distillate composition plots. From these curves it was estimated that about 30 to 45 minutes of retention would be necessary for a continuous reactor.

Distillate ratios of $HF/P_2O_5$ are tabulated in column 17 of Table IV. Column 18 of Table IV shows the ratio of $HF/SiO_2$ in the distillate. The ratio is remarkably constant and represents about 40% transfer of silica in the feed to distillate. This silica is removed from the system in the final rectification zones.

The dry, washed underflow solid typically analyzed 97.5% $CaSO_4$, 0.02% $Al_2O_3$, 0.02% $Fe_2O_3$, 0.3% MgO and 0.7% F. An IR examination using a KBr disk medium showed no indication of hemihydrate or dihydrate calcium sulphate but only trace quantities of free water. Repeated equilibrium with water did not alter the crystalline structure of the calcium sulphate. This material can have commodity value based on its form and purity.

Recovery of the free sulphuric-phosphoric acid mixture by filtration was easily accomplished.

TABLE IVa

BATCH DIGESTION DATA

| (1) | (2) | (3) | (4) | (5) | (6) |
|---|---|---|---|---|---|
| Example | R[a] | Ci % | CF % | Abs. Press. mm HG | Final Temp °C |
| 1 | 10.84 | 53.86 | 72.03 | 760 | 180 |
| 2 | 6.83 | 45.05 | 76.62 | 760 | 175 |
| 3 | 7.96 | 53.07 | 75.09 | 760 | 180 |
| 4 | 7.99 | 53.13 | - | 760 | 183 |
| 5 | 6.17 | 54.06 | - | 760 | 177 |
| 6 | 6.15 | 53.99 | - | 760 | 157 |
| 7 | 7.99 | 53.11 | 75.33 | 760 | 157 |
| 8 | 9.09 | 52.15 | 75.18 | 760 | 176 |
| 9 | 8.74 | 42.18 | 77.33 | 760 | 185 |
| 10 | 8.50 | 46.90 | 78.11 | 760 | 186 |
| 11 | 8.26 | 47.02 | 78.60 | 760 | 187 |
| 12 | 8.26 | 47.38 | 78.33 | 760 | 189 |
| 13 | 8.26 | 47.39 | 79.31 | 760 | 192 |
| 14 | 8.28 | 47.49 | 86.35 | 254 | 151 |
| 15 | 8.29 | 47.43 | 84.46 | 200 | 146 |
| 16 | 8.28 | 47.48 | 80.84 | 86 | 121 |
| 17 | 9.96 | 57.03 | 81.27 | 99 | 132 |
| 18 | 8.28 | 52.52 | 83.89 | 760 | - |
| 19 | 6.90 | 47.49 | 85.04 | 760 | - |
| 20 | 8.28 | 52.50 | 76.99 | 150 | 135 |
| 21 | 5.90 | 47.49 | 81.16 | 200 | 146 |
| 22 | 8.28 | 52.49 | 80.79 | 200 | 145 |
| 23 | 6.00 | 54.98 | 87.04 | 200 | 155 |

a Washed and dried at 105°C

b Filtered

* Outside of desired range

TABLE IVb

BATCH DIGESTION DATA

| (1) | (7) | (8) | (9) | (10) | (11) | (12) |
|---|---|---|---|---|---|---|
| | Solid[a] | Liquid[b] | | | Distillate | |
| | | Pred. | Obs. | | Obs. | Pred. |
| Example | HF,% | HF% | HF,% | $H_2O$,% | HF,% | HF,% |
| 1 | 1.0 | 1.05 | 0.21 | - | 14.8 | 17.3 |
| 2 | - | - | - | - | 12.8 | - |
| 3 | 1.0 | 1.12 | 0.28 | - | 18.7 | 20.9 |
| 4 | 1.0 | - | 0.30 | - | 17.6 | - |
| 5 | 2.0 | - | 0.31 | - | 23.4 | - |
| 6 | 2.0 | - | 0.44 | - | 25.6 | - |
| 7 | 0.68 | 1.10 | 0.34 | - | 19.7 | 20.8 |
| 8 | 1.29 | 0.92 | 0.31 | - | 15.7 | 17.3 |
| 9 | 0.50 | 0.51 | 0.16 | - | 9.5* | 10.2 |
| 10 | 0.87 | 0.67 | 0.20 | - | 12.7 | 14.0 |
| 11 | 0.95 | 0.64 | 0.22 | - | 12.6 | 13.6 |
| 12 | 0.85 | 0.66 | 0.21 | - | 13.1 | 13.9 |
| 13 | 0.67 | 0.63 | 0.17 | - | 13.1 | 13.7 |
| 14 | 0.59 | 0.44 | 0.15 | 16.25 | 11.7 | 12.5 |
| 15 | 0.72 | 0.48 | 0.17 | 18.10 | 11.0 | 12.8 |
| 16 | 1.07 | 0.58 | 0.17 | 24.24 | 11.8 | 13.4 |
| 17 | 0.86 | 0.76 | 0.14 | 21.03 | 16.5 | 18.2 |
| 18 | 0.56 | 0.63 | 0.11 | 18.45 | 15.4 | 16.4 |
| 19 | 0.85 | 0.66 | 0.20 | 15.36 | 16.1 | 17.8 |
| 20 | 1.14 | 0.92 | 0.22 | 25.38 | 16.7 | 18.7 |
| 21 | 0.94 | 0.80 | 0.38 | 22.11 | 17.2 | 18.8 |
| 22 | 0.57 | 0.74 | 0.10 | 21.69 | 16.3 | 17.3 |
| 23 | 0.93 | 0.99 | 0.18 | 13.66 | 24.8 | 29.1 |

a Washed and dried at 105°C

b Filtered

* Outside of desired range

TABLE IVc

BATCH DIGESTION DATA

| (1) | (13) | (14) | (15) | (16) | (17) | (18) |
|---|---|---|---|---|---|---|
| | Yield | | Underflow Solids | | Distillate | |
| | Obs. | Pred. | Obs. | Pred. | | |
| Example | % | % | % | % | $HF/P_2O_5$ | $HF/SiO_2$ |
| 1 | 92.2 | 88.1 | 23.6 | 25.2 | - | - |
| 2 | - | - | - | - | - | - |
| 3 | 92.3 | 92.0 | 29.9 | 32.4 | - | - |
| 4 | 92.0 | - | - | - | - | - |
| 5 | 88.0 | - | - | - | - | - |
| 6 | 86.4 | - | - | - | - | - |
| 7 | 92.9 | 92.1 | 29.2 | 32.4 | - | - |
| 8 | 89.5 | 92.5 | 29.6 | 29.6 | - | - |
| 9 | 95.6 | 96.5 | 30.3 | 31.0 | - | - |
| 10 | 93.6 | 95.7 | 31.0 | 32.5 | - | 28.2 |
| 11 | 93.0 | 96.0 | 31.0 | 32.6 | - | 26.8 |
| 12 | 93.4 | 95.8 | 31.1 | 32.5 | 3346 | - |
| 13 | 94.8 | 96.2 | 31.3 | 32.8 | 4903 | 24.3 |
| 14 | 95.4 | 98.1 | 34.3 | 35.4 | 1093 | 28.6 |
| 15 | 94.7 | 97.7 | 35.3 | 34.9 | - | - |
| 16 | 92.5 | 96.8 | 33.2 | 34.0 | - | 27.4 |
| 17 | 92.9 | 94.9 | 29.4 | 30.0 | 18330 | 26.3 |
| 18 | 95.9 | 97.0 | 33.8 | 34.8 | 7900 | - |
| 19 | 94.2 | 97.9 | 41.7 | 43.1 | 5194 | - |
| 20 | 91.5 | 93.7 | 32.3 | 32.9 | - | - |
| 21 | 92.0 | 96.9 | 40.2 | 42.0 | 6880 | - |
| 22 | 95.9 | 95.8 | 33.0 | 33.9 | 19180 | - |
| 23 | 94.0 | 97.5 | 46.4 | 47.3 | - | 25.5 |

a Washed and dried at 105°C
b Filtered
* Outside of desired range

Example 24

One hundred and seventy-seven grams of a wet fluoride solids containing on a dry basis 24.5% F, 14.2% $P_2O_5$, 3.8% $CO_2$, 54.0% CaO, and other minor impurities normally found in cooling pond water and 77 grams of water were agitated in a Teflon flask fitted with a heating mantle and a condenser as described for Examples 1 to 23. To this mixture were added 107.3 grams of 97% $H_2SO_4$ (R=1, Ci=20). The reaction temperature was increased to 107°C during which time about 26 grams of distillate were collected which analyzed 12.8% HF. This represents an overhead yield of about 13% of the fluoride initially contained in the fluoride solids. The digester residue contained about 56% by weight solids and the free liquid contained about 25% $H_2SO_4$ + $H_3PO_4$ (Cf = 25%). Because R, Ci, and Cf were at the extreme bottom limits of the broad preferred range, the digestion was only marginally satisfactory, with the digester residue slurry containing about 56% solids.

Example 25

In an experiment similar to Example 24, 1975 grams of a fluoride solid slurry containing 100 grams of the fluoride solid were mixed with 469 grams of 97% $H_2SO_4$ (R=15, Ci=20). The temperature was increased to 240°C which rendered an average distillate containing by weight 1.7% HF, 0.2% $SiO_2$, and 100 ppm $P_2O_5$ (HF:$P_2O_5$ = 170:1). A 99% recovery of the fluoride was accomplished. The acid residue contained 90% $H_2SO_4$ + $H_3PO_4$ (Cf=90%). Because R was at the extreme high end of the broad preferred range, and Ci was the extreme low end of the broad preferred range, operation of the digester was unsatisfactory, with the distillate containing only 1.7% by weight HF.

Example 26

In an experiment similar to Example 25, a dry fluoride solid is used which contains 4.8% F, 49.4% CaO, 20.0% $P_2O_5$, and other impurities normally found in cooling pond water. One hundred grams of the solid are slurried with

291 grams of water followed by 138 grams of 97% $H_2SO_4$ (R=15, Ci=20). The mixture is heated to 200°C. Distillate amounting to about 291 grams contains 99% of the fluoride initially contained in the solid is obtained. The free liquid phase of the residue contains 0.03% HF, 23.9% $P_2O_5$, 56.8% $H_2SO_4$, and 10.0% $H_2O$.

Example 27

Five hundred grams of distillate obtained from the digestion of fluoride solids and containing about 13% HF were evaporated at a pressure of 100 mm Hg ($13 \times 10^3 N/m^2$) in Teflon-packed monel column to yield a residue which contained about 36% HF, 3% $SiO_2$, 100 ppm $P_2O_5$, with the balance being water. The average distillate contained less than 1% HF. An equilibrium boiling point of about 62°C was achieved.

Example 28

An experiment similar to Example 27 was conducted except that the rectification was conduted at an atmospheric pressure of about 755 mm of Hg ($1 \times 10^5 N/m^2$). The equilibrium boiling point was 111 to 112°C. The bottoms contained 36% HF, 3% $SiO_2$, 100 ppm $P_2O_5$, with the balance water. The distillate was essentially water containing 4% HF on the average.

Control 1

A fluoride solution such as the azeotrope produced in Examples 27 and 28 is diluted with 98% $H_2SO_4$ in the ratio 100 parts fluoride solution to 44 parts sulphuric acid on a weight basis. This produces a final mixture containing 25.0% HF, 29.9% $H_2SO_4$ and the balance water and minor impurities. This solution is boiled at atmospheric pressure to 115°C to yield a vapour phase containing about 50% HF plus some silicon fluoride impurities. At this temperature, the sulphuric acid contains about fifty percent of the fluoride.

This control shows that if insufficient sulphuric acid is added to the azeotrope to produce a mixture containing at least 40% $H_2SO_4$, a substantial portion of the HF is

left in the sulphuric acid and the distillate has a low HF content.

Example 29

An experiment similar to Example 28 is conducted except that the $HF-H_2SO_4-H_2O$ mixture contains 4.4% HF, 86.0% $H_2SO_4$, plus water and silicon impurities. Heating the mixture to 400°F (205°C) renders a vapour containing nearly 99% HF and silicon fluorides. About eighty percent of the fluoride is distilled from the sulphuric acid.

By comparison with Control 1, Example 29 shows that addition of sufficient sulphuric acid to an azeotropic mixture to yield a mixture having a high concentration of $H_2SO_4$ produces a vapour having a high HF concentration.

Example 30

Conversion of wet fluoride solids to anhydrous hydrofluoric acid was demonstrated on a continuous pilot plant scale. Reference is made to Table V which contains a material balance of the various stages based on about a two pounds (0.9 kg) per hour anhydrous hydrofluoric acid production rate. The data resulted from at least seventy-five hours of operation. The process scheme is shown in Figure 4.

Referring to Figure 4, wet fluoride solids introduced via line 51 to a stirred feed tank 72 were withdrawn therefrom by means of a pump 73 and passed in line 51' to be introduced into the top of an upright cylindrical graphite-lined vessel 74 (25.7 cm IDX 61.5 cm) fitted with a graphite paddle agitator 75. The liner was shelled by 0.32 cm mild steel, lined with 0.48 cm lead, which was in turn cemented to a 3.1 cm graphite liner. The vessel's bottom was lined as was the side, but the top was a sheet of Inconel 825.

Simultaneously, concentrated sulphuric acid (Ci=56, R=8) was also introduced to vessel 74 via line 52. 240°F (116°C) steam 53 was injected into the bottom of the vessel 74 tangentially to the side wall. Supplemental heat to maintain a temperature of 350$\pm$ 10°F (177$\pm$ 6°C) was added

by means of asbestos covered chromel wire windings overlayed with asbestos on the outside of the vessel. It has been observed that maximum yield of HF is obtained when the temperature in the digester vessel 74 is maintained in the range 350°F to 360°F (177°C to 182°C). Temperatures were monitored by thermocouples.

Weak hydrofluoric acid vapour containing 89% of the initial fluoride exited at the top of the vessel through an Inconel 825 pipe 76 and was condensed in water-jacketed Karbate tubes 78 as a weak acid condensate. The condensate was withdrawn in line 54 and collected in a tank 80. Volatile $CO_2$ was vented to the air at 55.

The acid slurry volume of the vessel was maintained at 15.0 litres by a gravity overflow system which was protected against short-circuiting by a draft tube. The underflow solids 56 were essentially $CaSO_4$ containing minor levels of impurities. The liquid phase 57 contained essentially 71.4% $H_2SO_4$ and 4.2% $H_3PO_4$ (Cf = 75.6%).

The weak acid condensate collected in tank 80, typically at ambient temperature, was continuously fed by means of a pump 82 from the tank 80 to a 7.6 cm I.D. Kynar lined column 84 packed with 178 cm of Kynar mesh. The inlet was 76 cm from the packing bottom. A Karbate pipe wrapped with chromel wire was used as a thermosyphon reboiler 86. Azeotropic hydrofluoric acid was removed from the column bottom by a gravity overflow 59 and collected in an azeotrope tank 86. At equilibrium under good operating conditions, the reboiler temperature was maintained at 234°F± 2°F (112°C± 1°C); while water distillate exiting in line 58 from an overhead condenser 88 contained less than about 500 ppm HF. A reflux ratio of about 0.5 to 1.0 was employed.

The azeotropic hydrofluoric acid, typically at ambient temperature, was passed by pump 90 from the azeotrope tank 86 and was mixed with concentrated sulphuric acid from source 60 in a 1 cm I.D. pipe 92 and was fed to a 244 cm Teflon mesh packed Teflon lined column 94 of 10 cm inside

diameter, being introduced 61 cm from the bottom of the column 94. The feed mixture contained 74.3% $H_2SO_4$ on a HF free basis and 35.0% HF on a $H_2SO_4$ free basis. Live 240°F (116°C) steam was added at the bottom of the column in line 61 as an energy supplement and to assist in defluorination. A wire would Karbate thermosyphon served as a reboiler 96. Spent sulphuric acid at 290°F$\pm$ 10°F (143°C$\pm$ 6°C) was removed from the reboiler 96 by a gravity overflow system 62. Anhydrous hydrofluoric acid exiting the column in line 67 was condensed in an overhead monel condenser 98 at 40°F to 50°F (4°C to 10°C), and one part of product anhydrous HF (withdrawn in line 63) to about nine parts reflux (recycled via line 9a) was collected. The water content of the reflux was continuously measured by conductivity. The volatiles from the monel condenser 98 in line 64 were water scrubbed in scrubber 100. Typical analysis of the anhydrous HF product was 0.007% $H_2O$, 0.0002% $H_2SiF_6$, 0.0005% $P_2O_5$, 0.007% nonvolatile as $H_2SO_4$ (includes $P_2O_5$), and 0.04% $SO_2$. The overall yield of fluoride from the wet solids to anhydrous hydrofluoric acid was typically 83% exluding recycle of fluoride values collected in vent scrubbers.

This Example demonstrates that, by the described process, a nearly complete separation of fluoride from phosphorus is achieved. The initial acidulation of the fluoride solids provided a $HF/P_2O_5$ weight ratio of 1270 in the weak acid condensate. This was improved to 2000,000 in the sulphuric acid extractive distillation stage.

TABLE Va

MATERIAL BALANCE FOR EXAMPLE 30

| | 51 | | 52 | | 53 | | 54 | |
|---|---|---|---|---|---|---|---|---|
| | WET FLUORIDE SOLIDS | | 98% $H_2SO_4$ | | STEAM | | WEAK ACID CONDENSATE | |
| | GM/H* | % | GM/H* | % | GM/H* | % | GM/H* | % |
| F | 1067.3 | 17.40 | | | | | 949.9 | 24.10 |
| $P_2O_5$ | 391.3 | 6.38 | | | | | 0.8 | 0.02 |
| $SiO_2$ | 207.5 | 3.38 | | | | | 51.2 | 1.30 |
| $Al_2O_3$ | 89.0 | 1.45 | | | | | | |
| $Fe_2O_3$ | 47.4 | 0.77 | | | | | | |
| MgO | 47.5 | 0.77 | | | | | | |
| CaO | 2022.0 | 32.96 | | | | | | |
| $SO_3$ | 106.7 | 1.74 | 9416.4 | 80.00 | | | 17.4 | 0.44 |
| $CO_2$ | 35.5 | 0.58 | | | | | | |
| $H_2O$ | 2453.7 | 40.00 | 2345.0 | 20.00 | 2564.3 | 100.00 | 2901.8 | 73.64 |
| OTHER | <333.8> | <5.44> | | | | | 19.6 | 0.50 |
| TOTAL | 6134.1 | 99.99 | 11770.4 | 100.00 | 2564.3 | 100.00 | 3940.7 | 100.00 |

*GRAMS PER HOUR

TABLE Vb

MATERIAL BALANCE FOR EXAMPLE 30

| | 55 | | 56 | | 57 | |
|---|---|---|---|---|---|---|
| | VOLATILES | | UNDERFLOW SOLIDS | | UNDERFLOW LIQUID | |
| | GM/H* | % | GM/H* | % | GM/H* | % |
| F | | | 68.2 | 1.38 | 49.2 | 0.43 |
| $P_2O_5$ | | | 41.5 | 0.84 | 349.0 | 3.03 |
| $SiO_2$ | | | 7.0 | 0.14 | 149.3 | 1.30 |
| $Al_2O_3$ | | | 33.7 | 0.68 | 55.3 | 0.48 |
| $Fe_2O_3$ | | | 5.6 | 0.11 | 41.8 | 0.36 |
| MgO | | | 5.6 | 0.11 | 41.9 | 0.36 |
| CaO | | | 2018.4 | 40.85 | 3.6 | 0.03 |
| $SO_3$ | | | 2789.8 | 56.46 | 6715.9 | 58.32 |
| $CO_2$ | 35.5 | 50.00 | | | | |
| $H_2O$ | 35.5 | 50.00 | 0 | 0 | 4434.7 | 38.51 |
| OTHER | | | <28.8> | <0.58> | <324.6> | <2.82> |
| TOTAL | 71.0 | 100.00 | 4941.0 | 99.99 | 11516.1 | 100.00 |

*GRAMS PER HOUR

TABLE Vc

MATERIAL BALANCE FOR EXAMPLE 30

| | 58 | | 59 | | 60 | | 61 | |
|---|---|---|---|---|---|---|---|---|
| | $H_2O$ DISTILLATE | | AZEOTROPE | | 98% $H_2SO_4$ | | STEAM | |
| | GM/H* | % | GM/H* | % | GM/H* | % | GM/H* | % |
| F | 0.5 | 0.04 | 949.4 | 34.30 | | | | |
| $P_2O_5$ | | | 0.8 | 0.03 | | | | |
| $SiO_2$ | | | 51.2 | 1.85 | | | | |
| $Al_2O_3$ | | | | | | | | |
| $Fe_2O_3$ | | | | | | | | |
| MgO | | | | | | | | |
| CaO | | | | | | | | |
| $SO_3$ | | | 17.4 | 0.63 | 4363.4 | 80.00 | | |
| $CO_2$ | | | | | | | | |
| $H_2O$ | 1172.0 | 99.96 | 1729.8 | 62.49 | 1090.9 | 20.00 | 678.5 | 100.00 |
| OTHER | | | 19.6 | 0.71 | | | | |
| TOTAL | 1172.5 | 100.00 | 2768.2 | 100.01 | 5454.3 | 100.00 | 678.5 | 100.00 |

*GRAMS PER HOUR

TABLE Vd

MATERIAL BALANCE FOR EXAMPLE 30

| | 62 | | 63 | | 64 | |
|---|---|---|---|---|---|---|
| | AHF | | SPENT $H_2SO_4$ | | VENT | |
| | GM/H* | % | GM/H* | % | GM/H* | % |
| F | 882.4 | 94.96 | 1.0 | 0.01 | 66.0 | 73.33 |
| $P_2O_5$ | <0.1 | | 0.8 | 0.01 | | |
| $SiO_2$ | <0.1 | | | | 51.2 | 56.89 |
| $Al_2O_3$ | | | | | | |
| $Fe_2O_3$ | | | | | | |
| MgO | | | | | | |
| CaO | | | | | | |
| $SO_3$ | <0.1 | | 4380.8 | 55.58 | | |
| $CO_2$ | | | | | | |
| $H_2O$ | <0.1 | | 3499.2 | 44.40 | | |
| OTHER | 46.8 | 5.04 | | | <27.2> | <30.22> |
| TOTAL | 929.2 | 100.00 | 7881.8 | 100.00 | 90.0 | 100.00 |

*GRAMS PER HOUR

Control 2

Five grams of dry fluoride solids containing 23.6% F and 15.5% $P_2O_5$ were weighed into a platinum dish containing a Teflon stir bar. To this were added 3.69 grams of 98% $H_2SO_4$ and the mixture was heated to about 250°C on a magnetic stirrer hot plate for one hour. The residue weighed 6.95 grams and contained 6.28% F and 10.73% $P_2O_5$. The weight ratio of $HF/P_2O_5$ volatilized was 28.

This test demonstrates that a digestion zone operated according to the principles of this invention, as shown by Example 32, effects a separation from HF from $P_2O_5$ not effected by prior art methods, represented by this test, where fluoride solids are treated with sulphuric acid in a low humidity environment.

Control 3

Ten grams of the same solids used in Control 2 were combined with 30.0 grams of 98% $H_2SO_4$ in a 125 ml glass filter flask. Suction was pulled on the flask through a series of five gas scrubbers containing about 1% NaOH in water. The flask was heated intensely on a hot plate until the reaction ceased. Analyses of the residue and the scrubber liquor indicated weight ratios of $HF/P_2O_5$ volatilized of 22 and 37 respectively. These are considerably smaller than the ratio typically required for anhydrous hydrofluoric acid (HF/Nonvolatile acid = 10,000) and serves to illustrate the necessity of the described process because prior art processes cannot effect a satisfactory separation of HF from $P_2O_5$ values.

Example 31

Sediment collected from a phosphate operation cooling pond is water washed and dried at 105°C. Nineteen hundred and seventy seven grams of this material containing 25.0% F, 24.0% CaO, 8.1% $SO_3$, 2.1% $P_2O_5$, 6.3% $Al_2O_3$, 0.4% $Fe_2O_3$, 0.5% $Na_2O$, 16.9% total $SiO_2$, 11.7% sand $SiO_2$, and various other minor impurities are mixed with 2479 grams of water in a Teflon flask. To this mixture are added 5482 grams of 96% $H_2SO_4$ ($R = 8$, $C_i = 45$). The total active

metal content (excluding sand $SiO_2$) is used to compute R and Ci rather than only CaO because of the significant contributions made by the silicon and aluminum in this material. The solution is boiled to a final temperature of 183°C while the distillate is condensed and collected. The weak acid condensate contains 12.3% HF, 5.6% $SiO_2$, and the balance essentially water. Eighty-eight percent of the fluoride present in the initial solids is collected as weak acid condensate. The flask residue contains 12% solids and the liquid phase contains 75% $H_2SO_4$ plus $H_3PO_4$ (Cf = 75%).

Example 32

An ambient temperature slurry containing 59.8% solids, the solids containing on a dry basis 29.62% F, 10.84% $P_2O_5$, and 0.43% $CO_2$, was metered at 92.2 grams per minute into the vessel described in Example 30. Simultaneously, 238.0 grams per minute of 98% $H_2SO_4$ at ambient temperature and 30.0 grams per minute of 240°F (116°C) steam were metered into the vessel which was maintained at 350°F (177°C). The nominal parameters for the test were R = 10, $C_i$ = 66, $C_f$ = 77. The weak acid condensate contained 33.9% HF at a yield of 77%.

Example 33

A weak acid condensate at 80°F (27°C) was made in a manner similar to that described in Example 30 but contained 22.0% HF, 0.89% $SiO_2$, 0.30% $P_2O_5$, 0.17% $SO_4$ and the balance essentially water. One thousand three hundred and sixty-four grams per hour of this solution were added together with 3469 grams per hour of 98% $H_2SO_4$ at 80°F (27°C) into the sulphuric acid column described in Example 30. Simultaneously 283 grams per hour of 240°F (116°C) steam were added at the bottom of the column 94 to aid in defluorination. The underflow contained 70.6% $H_2SO_4$, 0.01% F, 0.010% $P_2O_5$, 0.0098% $SiO_2$ and the balance essentially water. This stream was withdrawn at about 290°F (143°C) and at about 4816 grams per hour. Condensate at 40°F to 50°F (4°C to 10°C) was collected at about 300

grams per hour and analyzed 0.0022% $SiO_2$, 0.0005% $P_2O_5$, 0.038% $SO_2$, 0.0064% nonvolatile acidity as $H_2SO_4$, 0.007% $H_2O$ and the remainder essentially HF.

Example 34

The same weak acid used in Example 33 was fed together with 1.95 times its weight of 98% $H_2SO_4$ to the column 94 under the same conditions except that no steam was added at the bottom of the column. The underflow at 285°F (141°C) contained 69.0% $H_2SO_4$, 1.2% HF, other minor impurities, and water. The hydrogen fluoride condensate had essentially the same analysis as illustrated in Example 33. Comparison of Examples 33 and 34 shows that introduction of steam to the extractive distillation column enhances yield.

The examples demonstrate that the process described herein can be used to produce a substantially phosphate-free anhydrous hydrofluoric acid from phosphate-contaminated metallic fluoride salts.

CLAIMS

1. A method for recovering hydrogen fluoride from metallic fluoride salts comprising metallic cations reactive with sulphuric acid, which method comprises introducing to a digestion zone such metallic fluoride salts, water and/or steam, and sulphuric acid and maintaining the digestion zone at an appropriately elevated temperature for reaction therein to produce a gas comprising hydrogen fluoride and phosphate values, and a slurry comprising a liquid component including introduced sulphuric acid, introduced water and phosphoric acid, and a residual solids component resulting from reaction of the metallic fluoride salts with the sulphuric acid, the concentration of water and sulphuric acid in the digestion zone being such that the resulting gas has a weight ratio of hydrogen fluoride to $P_2O_5$ of at least about 100:1; and withdrawing the resulting gas from the digestion zone.

2. A method for recovering hydrogen fluoride substantially free of phosphate values from metallic fluoride salts comprising metallic cations reactive with sulphuric acid, which method comprises introducing to a digestion zone such metallic fluoride salts, water and/or steam, and sulphuric acid and maintaining the digestion zone at an appropriately elevated temperature to produce a gas comprising hydrogen fluoride and phosphate values from the metallic fluoride salts and a slurry comprising a liquid component including introduced water, introduced sulphuric acid and phosphoric acid, and a residual solids component resulting from the reaction of metallic fluoride salts with sulphuric acid; and withdrawing the resulting gas from the digestion zone, the quantity of water and sulphuric acid introduced to the digestion zone being so selected that the following equations are substantially satisfied:

$$HF_v = \frac{KCi}{((K-1)J+1)R} \geq 10\%$$

$$Y = \frac{100JK}{(K-1)J+1} \geq 60\%$$

and $$US = \frac{1}{\frac{RW}{CF} + \frac{1}{100}} \leq 50\%$$

where:

$$J = 1 - \frac{Ci}{Cf};$$

$HF_v$ = concentration of HF in the resulting gas withdrawn from the digestion zone in % by weight;

Y = the percent by weight of the fluorine in the metallic fluoride salts introduced to the digestion zone that is present in the resulting gas withdrawn from the digestion zone;

US = solids contents of the slurry, % by weight;

$K = 0.095565e^{(0.075435Cf)}$;

W = with respect to the metallic fluoride salts introduced to the digestion zone, the mass ratio of fluorine represented as HF to calcium oxide represented as $CaSO_4$;

Ci = amount of sulphuric acid and phosphoric acid theoretically present in the digestion zone after introduction of the sulphuric acid and water and/or steam to the digestion zone, assuming no fluoride values are volatilized, in excess of the amount of sulphuric acid required for reaction with the reactive metallic cations in the digestion zone, where Ci is in units of percent by weight in the liquid phase;

R = Ci/HFi, where HFi is the theoretical concentration of hydrogen fluoride in the liquid in the digestion zone after introduction of the sulphuric acid and water and/or steam to the digestion zone, assuming no fluoride values are volatilized, in units of percent by weight in the liquid in the digestion zone; and

Cf = actual concentration of sulphuric acid and phosphoric acid in the liquid component in units of percent by weight in the liquid component.

3. A method for recovering hydrogen fluoride substantially free of phosphate values from metallic fluoride salts comprising metallic cations reactive with sulphuric acid, which method comprises introducing to a digestion zone such metallic fluoride salts, water and/or steam, and sulphuric acid and maintaining the digestion zone at an appropriately elevated temperature to produce a gas comprising hydrogen fluoride and phosphate values from the metallic fluoride salts, and a slurry comprising a liquid component including introduced water, introduced sulphuric acid and phosphoric acid, and a residual solids component resulting from reaction of the metallic fluoride salts with the sulphuric acid, the water and sulphuric acid being introduced to the digestion zone in such amounts that Ci is in the range about 20 to about 70, R is in the range about 1 to about 15, and Cf is in the range about 25 to about 90, where:

Ci = amount of sulphuric acid and phosphoric acid theoretically present in the digestion zone after introduction of the sulphuric acid and water and/or steam to the digestion zone, assuming the fluoride values are volatilized, in excess of the amount of sulphuric acid required for reaction with the reactive metallic cations in the digestion zone, Ci being expressed in units of percent by weight in the liquid phase;

R = Ci/HFi, where HFi is the theoretical concentration of hydrogen fluoride in the liquid in the digestion zone after introduction of the sulphuric acid and water and/or steam to the digestion zone, assuming no fluoride values are volatilized, in units of percent by weight in the liquid in the digestion zone; and

Cf = actual concentration of sulphuric acid and phosphoric acid in the liquid component in units of percent by weight in the liquid component;

and

withdrawing the resulting gas from the digestion zone.

4. A method according to claim 1 or 3, wherein at least 60% of the fluorine in the metallic salts introduced to the digestion zone are present in the gas withdrawn from the digestion zone.

5. A method according to claim 1, 3 or 4, wherein the gas withdrawn from the digestion zone comprises at least 10% by weight hydrogen fluoride.

6. A method according to any one of claims 2 to 5, wherein R is in the range about 6 to about 10.

7. A method according to any one of claims 2 to 6, wherein Ci is in the range about 40 to about 55.

8. A method according to any one of claims 2 to 7, wherein Cf is in the range about 75 to about 85.

9. A method according to any one of the preceding claims, in which the gas withdrawn from the digestion zone has a weight ratio of hydrogen fluoride to $P_2O_5$ of at least about 1000:1.

10. A method according to any one of the preceding claims, wherein at least 80% of the fluorine in the metallic salts introduced to the digestion zone are present in the gas withdrawn from the digestion zone.

11. A method according to any one of the preceding claims, wherein the distillate withdrawn from the digestion zone comprises at least 20% by weight hydrogen fluoride.

12. A method according to any one of the preceding claims, further comprising withdrawing the slurry from the digestion zone.

13. A method according to claim 12, wherein the withdrawn slurry is of such consistency that it is pumpable.

14. A method according to claim 13, wherein the withdrawn slurry has a solids content of less than about 45% by weight.

15. A method according to any one of the preceding claims, wherein the digestion zone is maintained at an absolute pressure in the range about 90 mm Hg ($12x10^3$ $N/m^2$) to about 1 atmosphere (1 $N/m^2$).

16. A method according to any one of the preceding claims, wherein metallic fluoride salts comprise at least 7% by weight on a dry basis fluorine and from about 4% to about 25% by weight on a dry basis $P_2O_5$.

17. A method according to any one of the preceding claims, wherein the metallic fluoride salts comprise fluoride-containing material precipitated from a waste stream of a wet process phosphoric acid plant.

18. A method according to any one of the preceding claims, further comprising treating the withdrawn gas to produce a vapour enriched in hydrogen fluoride, such treatment involving rectification with sufficient sulphuric acid to produce a vapour comprising at least 80% by weight HF and having a hydrogen fluoride to $P_2O_5$ weight ratio of at least 10,000:1.

19. A method according to claim 18, wherein sufficient sulphuric acid is used in said rectification to yield a solution comprising from about 40% to about 90% by weight sulphuric acid on a hydrogen fluoride-free basis.

20. A method according to claim 18 or 19, wherein steam is introduced to the zone in which said rectification with

sulphuric acid is carried out.

21. A method according to claim 18, 19 or 20, wherein the withdrawn gas is subjected to an initial rectification step to produce a substantially azeotropic mixture of water and hydrogen fluoride and containing $P_2O_5$, the azeotropic mixture thereafter being further rectified with said sulphuric acid.

22. A method according to any one of claims 18 to 21, including further rectifying the vapour produced by rectification with said sulphuric acid to produce a vapour comprising at least 99% by weight hydrogen fluoride.

23. A method for producing substantially anhydrous hydrogen fluoride having a hydrogen fluoride to $P_2O_5$ weight ratio greater than about 10,000 from a feed mixture comprising $P_2O_5$ and from about 20 to about 35% by weight hydrogen fluoride, the weight ratio of hydrogen fluoride to $P_2O_5$ in the feed mixture being in the range about 100:1 to 10,000:1, the remainder of the feed mixture being constituted substantially entirely by water, which method comprises introducing such a feed mixture to a rectification zone for rectification of the feed mixture therein to produce a vapour stream enriched with hydrogen fluoride; introducing sufficient sulphuric acid to the rectification zone such that the resulting vapour stream comprises at least 80% by weight HF and has a hydrogen fluoride to $P_2O_5$ weight ratio of at least 10,000:1; and withdrawing the resulting vapour stream enriched with hydrogen fluoride from the rectification zone.

24. A method according to claim 23, including further rectifying the vapour stream withdrawn from the rectification zone to produce a vapour comprising at least about 99% by weight hydrogen fluoride.

25. A method according to claim 23 or 24, wherein sufficient sulphuric acid is introduced to the rectification zone to yield in combination with the feed mixture introduced to the rectification zone a solution comprising from about 40 to about 90% by weight sulphuric acid on a hydrogen fluoride-free basis.

26. A method according to claim 23, 24 or 25, wherein steam is introduced to the rectification zone.

27. A method according to any one of claims 23 to 26, wherein the feed mixture comprises a substantially azeotropic mixture of water and hydrogen fluoride prepared by rectifying a feed mixture comprising $P_2O_5$ and from about 10% to 35% by weight hydrogen fluoride in an initial rectification zone.

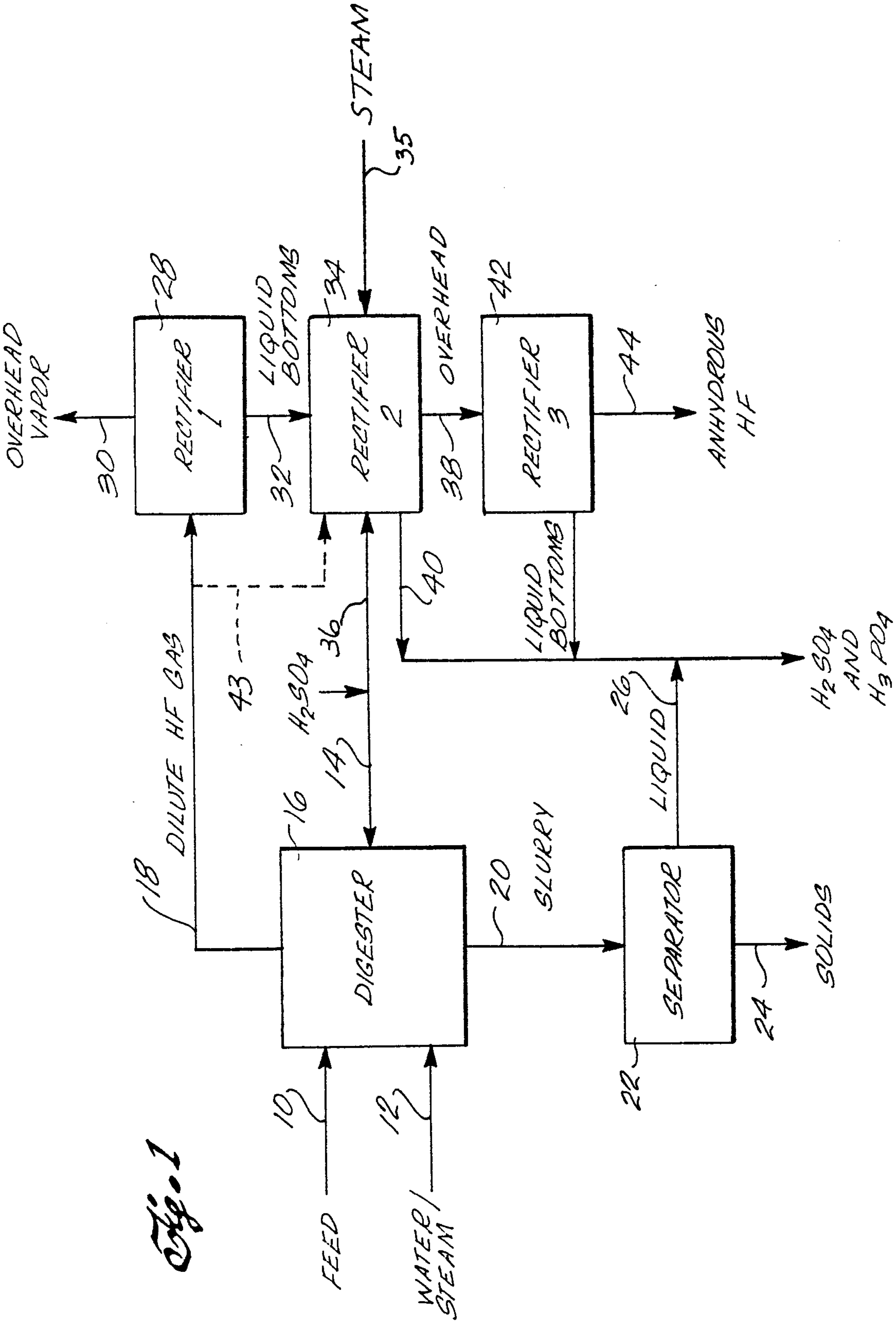
STEAM
35
28
LIQUID BOTTOMS
34
OVERHEAD
42
OVERHEAD VAPOR
RECTIFIER 1
RECTIFIER 2
RECTIFIER 3
44
ANHYDROUS HF
30
32
38
40
LIQUID BOTTOMS
36
$H_2SO_4$
43
DILUTE HF GAS
14
16
18
DIGESTER
20
SLURRY
LIQUID
26
$H_2SO_4$ AND $H_3PO_4$
SEPARATOR
SOLIDS
24
22
10
12
FEED
WATER/STEAM

Fig. 1

Fig. 2

PREDICTED DATA AT CF = 85

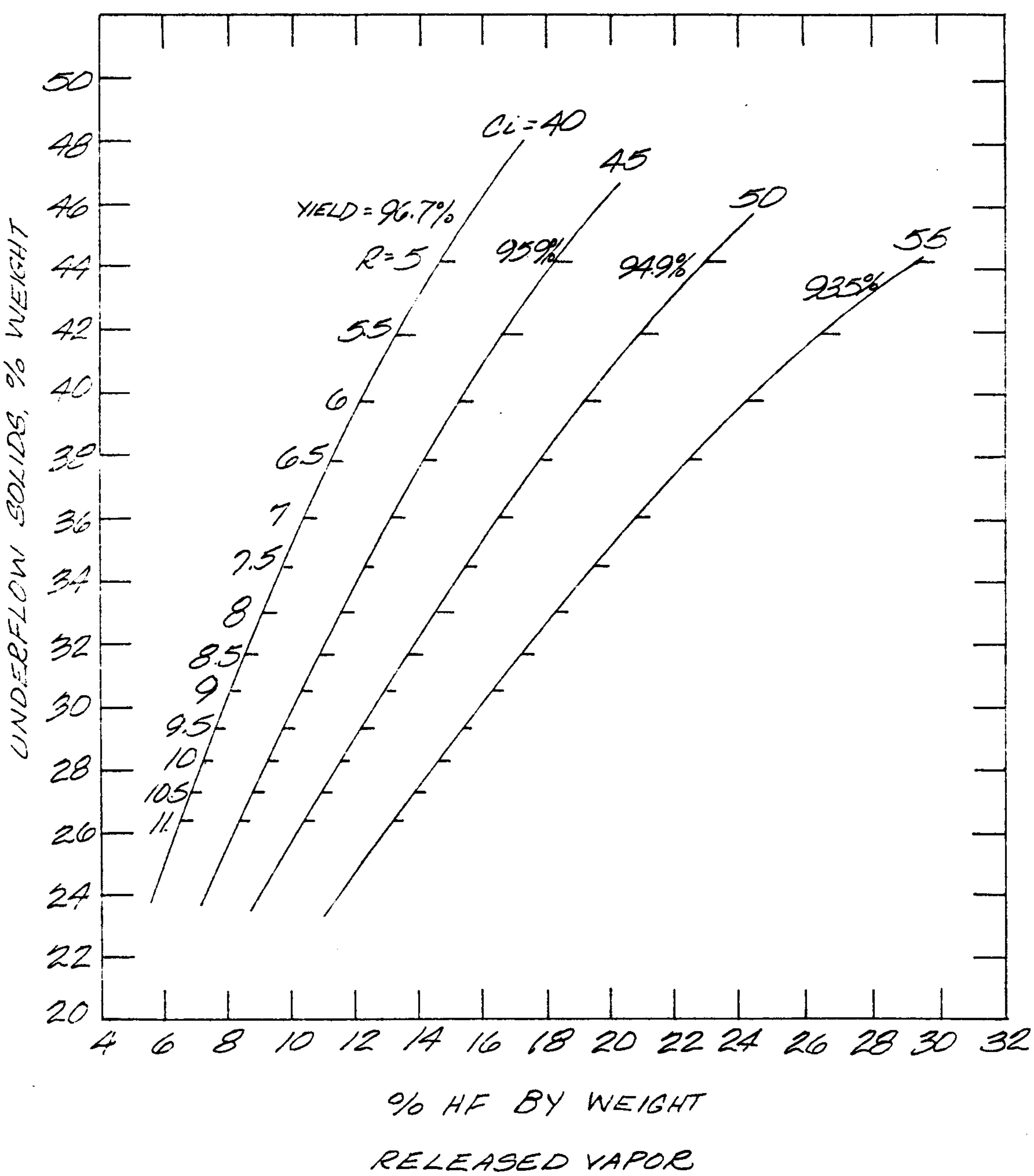

Fig. 3

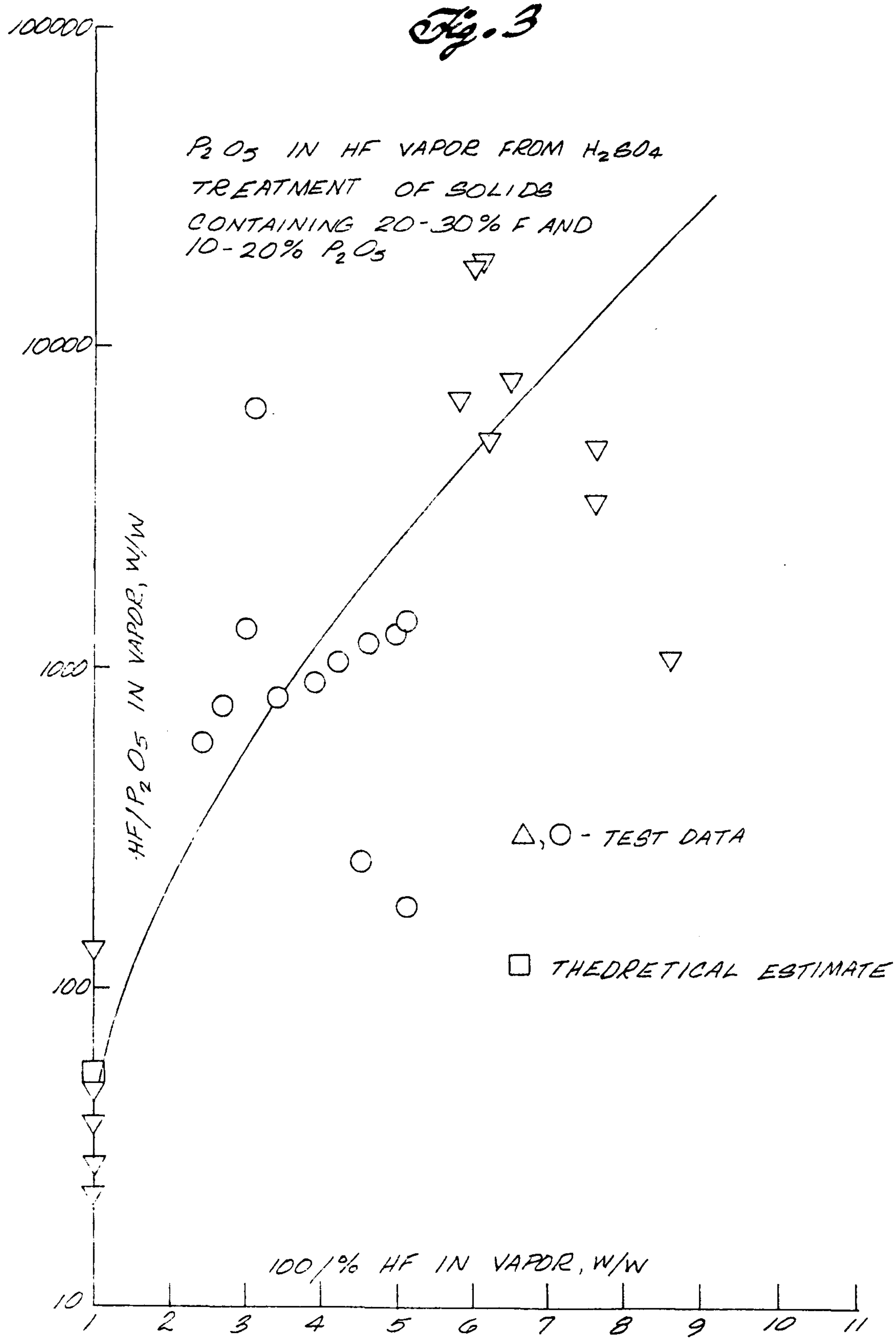

100000
10000
1000
100
10
P2 O5 IN HF VAPOR FROM H2SO4
TREATMENT OF SOLIDS
CONTAINING 20-30% F AND
10-20% P2O5
HF/P2O5 IN VAPOR, W/W
△,○ - TEST DATA
□ THEORETICAL ESTIMATE
100/% HF IN VAPOR, W/W
1
2
3
4
5
6
7
8
9
10
11

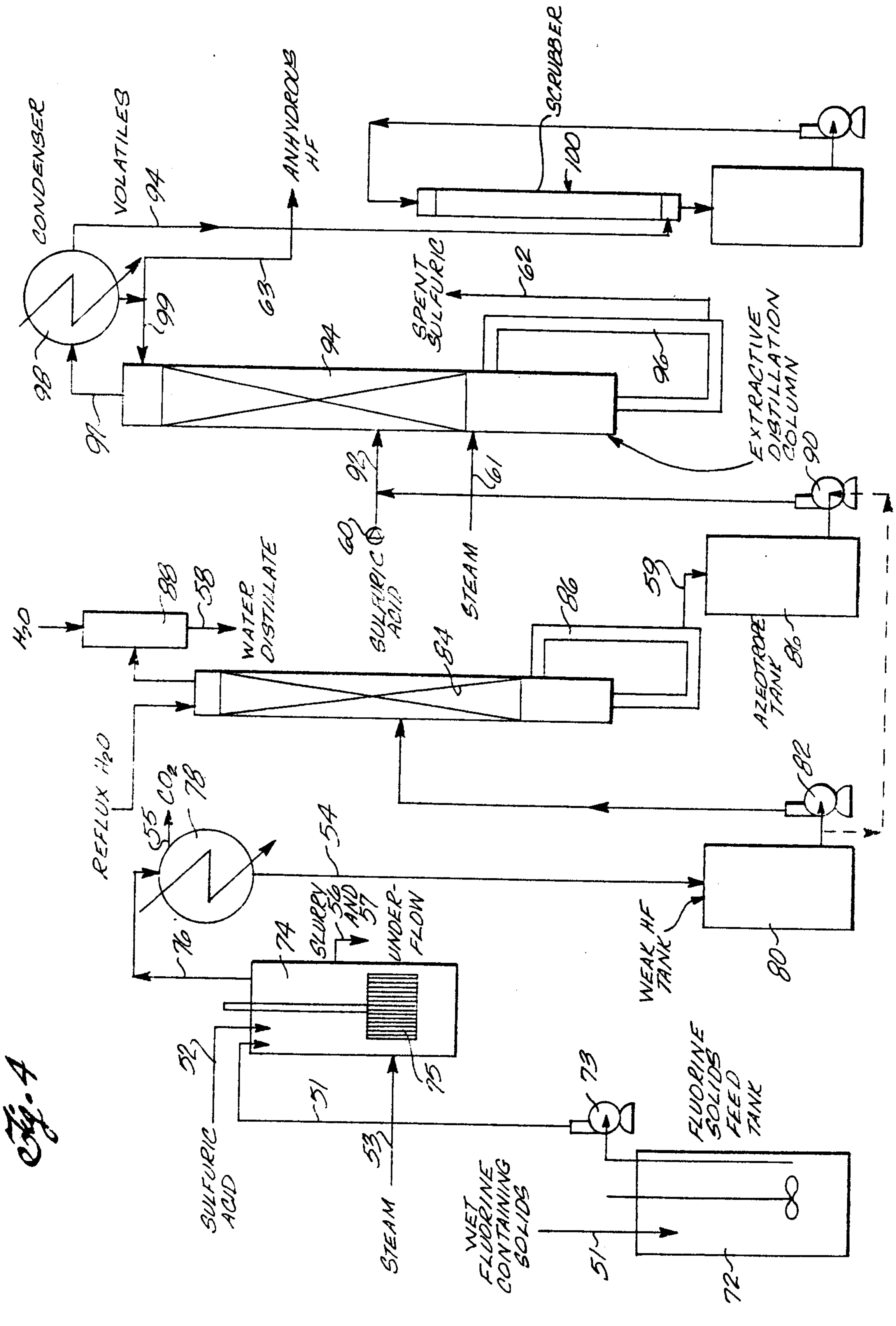
CONDENSER
VOLATILES
94
ANHYDROUS HF
SCRUBBER
100
98
99
63
SPENT SULFURIC
62
97
94
96
EXTRACTIVE DISTILLATION COLUMN
90
93
61
60
SULFURIC ACID
STEAM
59
AZEOTROPE TANK
86
$H_2O$
88
58
WATER DISTILLATE
84
86
REFLUX $H_2O$
55
$CO_2$
78
54
82
SLURRY 56 AND 57
UNDER-FLOW
74
76
WEAK HF TANK
80
52
SULFURIC ACID
51
53
STEAM
75
73
FLUORINE SOLIDS FEED TANK
WET FLUORINE CONTAINING SOLIDS
51
72

Fig. 4

European Patent Office

# EUROPEAN SEARCH REPORT

Application number

EP 79 301 101.6

## DOCUMENTS CONSIDERED TO BE RELEVANT

| Category | Citation of document with indication, where appropriate, of relevant passages | Relevant to claim |
|---|---|---|
| | US - A - 3 102 787 ( D. McMILLAN et al.)<br>* examples 1 and 5 *<br>-- | 1,18 |
| | US - A - 3 825 655 (E. EIPELTAUER et al.)<br>* example 1 *<br>-- | 1,18 |
| A | US - A - 3 870 786 (KIDDE)<br>-- | |
| A | US - A - 3 257 167 (A.C. MOHR et al.)<br>-- | |
| A | US - A - 3 167 391 (C.F. SWINEHART)<br>-- | |
| D | GB - A - 1 505 146 (OCCIDENTAL PETROLEUM CORP.)<br>---- | |

**CLASSIFICATION OF THE APPLICATION (Int. Cl.²)**

C 01 B 7/19

**TECHNICAL FIELDS SEARCHED (Int.Cl.²)**

C 01 B 7/00
C 01 B 25/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 12-09-1979 | KESTEN |